# EUROPEAN PATENT SPECIFICATION

(11) **EP 1 031 230 B1**
(45) Date of publication and mention of the grant of the patent: **11.01.2006**
(21) Application number: 98955609.7
(22) Date of filing: 17.11.1998
(51) Int. Cl.: H04M 3/30, H04M 3/22, H04M 1/24, H04M 19/02

(54) **METHOD AND APPARATUS FOR TESTING A SUBSCRIBER LINE INTERFACE**
VERFAHREN UND VORRICHTUNG ZUM TESTEN EINER TEILNEHMER-LEITUNGSSCHNITTSTELLE
PROCEDE ET APPAREIL D'ESSAI DE L'INTERFACE D'UNE LIGNE D'ABONNE

(30) Priority: 18.11.1997 FI 974275
(43) Date of publication of application: 30.08.2000
(73) Proprietor: Nokia Corporation, 02150 Espoo (FI)
(72) Inventor: NORDSTRÖM, Caj, FIN-02760 Espoo (FI); HEIKKILÄ, Juha, FIN-02730 Espoo (FI)
(74) Representative: Peltonen, Antti Sakari
(86) International application number: PCT/FI1998/000903
(87) International publication number: WO 1999/026347

(56) References cited:
- WO-A1-97/36413
- US-A- 5 550 894
- US-A- 5 638 440

## Description

### BACKGROUND OF THE INVENTION

The invention relates to a method for testing a subscriber line interface, a subscriber line being disconnected in the method from the subscriber line interface and a testing unit being connected to the subscriber line interface, in place of the subscriber line.

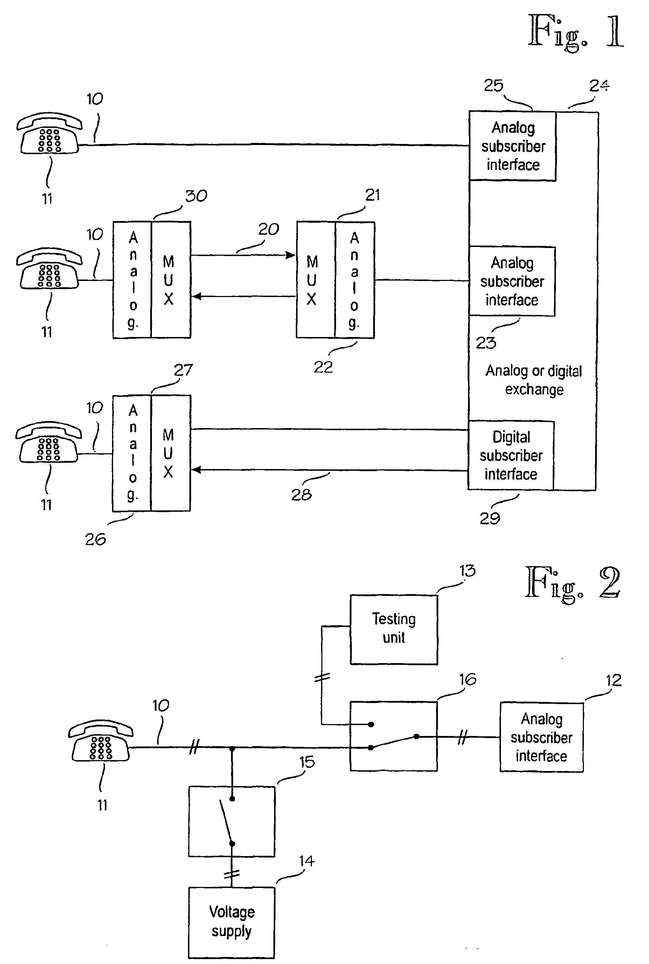

Although digital exchanges are nowadays widely used in telephone networks, subscriber lines between an exchange and a subscriber are typically analog two-wire lines. Digital exchanges therefore need to be provided with a specific analog subscriber interface, i.e. a subscriber line interface, which interfaces a time-divisional signal from a digital exchange to an analog subscriber line. This is shown in Figure 1, where a subscriber interface 25 of an exchange 24 is connected to a subscriber line 10 leading to a subscriber terminal 11. Figure 1 also shows an analog subscriber interface 26 which can be located in a multiplexing unit 27 arranged separately from the exchange 24, the multiplexing unit being connected to a digital subscriber interface 29 of the exchange via a PCM link 28 (of e.g. 2 Mbit/s). A remote multiplexing unit 30 can also be connected via a PCM link 20 (of e.g. 2 Mbit/s) to another multiplexing unit 21 located close to the exchange, an analog subscriber interface 22 of the other multiplexing unit being connected, in turn, to an analog subscriber interface 23 in a digital or an analog exchange. Multiplexers and digital connections used as described above support longer distances between subscribers and an exchange than a purely analog subscriber line. In addition, a multiplexer can be placed close to the subscribers, which allows a subscriber network to be implemented in a star configuration of short subscriber lines and, thereby, at relatively low cabling costs.

Document US 5,638,440 discloses a telephone system in which a protection circuit is connected to terminals between a subscriber line interface circuit and a telephone line.

Document WO 97/36413 discloses a remote telephone testing device for testing telephone equipment.

The function of line testing (also known as test out) of a subscriber line interface of a telephone network is to measure the electric properties, such as capacitance and leakage resistance, of subscriber lines connecting a subscriber line interface to a subscriber. Document US 5,550,894 discloses a device for sequentially altering the electrical condition of a communication line to allow a diagnostic routine to be performed on the communication line at a remote location from the device. Functions known as test in functions are being added, some having already been added, to international specifications (European Telecommunications Standards Institute) relating to subscriber interfacing in telephone networks. These functions comprise measurements in which a testing unit measures the characteristics of a subscriber line interface from the direction of the subscriber. In the measurement the subscriber line is disconnected from the subscriber line interface and the testing unit is connected to the subscriber line interface, in place of the subscriber line. The testing unit is then capable of measuring the direct current/direct voltage and the ringing current/ringing voltage supplied by the subscriber line, and the operation of ring trip and off-hook detectors, for example.

In prior art solutions testing is carried out by means of a specific test relay included in the subscriber interface card of the subscriber line interface, the test relay being used for disconnecting the subscriber line from the subscriber line interface and for connecting the testing unit in place of the subscriber line. This is a fairly simple solution and only requires a relay performing the disconnection and the connection, and a bus for connecting the subscriber line interface to the testing unit.

A problem with the above described arrangement is that since the subscriber line is disconnected during the testing, it does not receive common battery voltage. The subscriber may have devices that comprise e.g. number dialling and abbreviated dialling memories and use common battery voltage. If a device such as this does not comprise a battery or an accumulator securing the memories, or if the battery or accumulator is empty or malfunctions, the interruption caused by the testing will empty the memories.

### BRIEF DESCRIPTION OF THE INVENTION

An object of the invention is thus to provide a method allowing the above mentioned problems to be solved. The objects of the invention are achieved by means of a method and an apparatus characterized by what is stated in attached claims 1 and 2.

The invention is based on the idea that a common battery voltage supplied to a subscriber line is kept unchanged during the testing, both as regards voltage and polarity. This can be realized by means of a separate voltage supply being arranged to the subscriber line for the duration of the testing. The separate voltage supply being connected at the same time as the actual voltage supply is disconnected, or earlier, allows a voltage supply interruption harmful to the subscriber device to be avoided.

The invention also relates to an apparatus for testing a subscriber line interface, the apparatus comprising means for disconnecting a subscriber line from the subscriber line interface, a testing unit, and means for connecting the testing unit to the subscriber line interface, in place of the subscriber line, the apparatus being characterized in that it also comprises means for securing voltage supply to the subscriber line during the testing of the subscriber line interface. An apparatus such as this allows the advantages provided by the method of the invention to be achieved with a simple structure.

### BRIEF DESCRIPTION OF THE DRAWINGS

The invention will be now described in greater detail in connection with an embodiment and with reference to the accompanying drawings in which
Figure 1 illustrates different subscriber network implementations in an analog or a digital local exchange;
Figure 2 is a block diagram illustrating an arrangement of the invention for the testing of a subscriber line interface.

### DETAILED DESCRIPTION OF THE INVENTION

An arrangement according to Figure 2 for the testing of a subscriber line interface 12 functions as follows: in a normal situation a switching device 16 connects a subscriber terminal 11 to the subscriber line interface 12 through a subscriber line 10. The subscriber terminal 11 receives the supply voltage it possibly needs from the subscriber line interface 12.

When the operation of the subscriber line interface 12 is to be tested, a testing unit 13 is connected by means of the switching device 16 to the subscriber line interface 12, in place of the subscriber line 10, the subscriber line interface 12 thus being disconnected from the subscriber terminal 11. At the same time when the above mentioned connection is made, or prior to it, a separate voltage supply 14 is provided to the subscriber terminal 11 by means of a switching device 15, via the subscriber line 10. The separate voltage supply 14 supplies a voltage which is substantially of the same level and polarity as the voltage supplied by the subscriber line interface 12. With this method the supply voltage received by the subscriber is not disconnected at any point.

Correspondingly, when the testing is completed, return to the normal status is carried out by connecting the subscriber line 10 to the subscriber line interface 12 and disconnecting the testing unit 13, the separate voltage supply 14 being disconnected, at the same time or after a delay, from the subscribe line 10.

The nature of the measurements carried out by the testing unit 13 is not essential for the invention. The testing unit can be arranged to measure the magnitude of the direct current/direct voltage and the ringing current/ringing voltage supplied by the subscriber line interface, and the operation of ring trip and off-hook detectors. Although in the above described preferred embodiment the invention is applied to an analog subscriber line interface, it can be applied, in a corresponding manner, also when a digital subscriber line interface is tested, without departing from the basic idea of the invention.

It is apparent to a person skilled in the art that as technology advances, the basic idea of the invention can be implemented in various ways. The invention and its embodiments are therefore not restricted to the above described examples but they may vary within the scope of the claims.

## Claims

1. A method for testing a subscriber line interface (12), wherein a subscriber line (10) is disconnected from the subscriber line interface (12) and a testing unit (13) is connected to the subscriber line interface (12), in place of the subscriber line (10), **characterized in that** during the testing of the subscriber line interface (12), a continued voltage supply to the subscriber line (10) is secured by connecting a separate voltage supply (14) to the subscriber line (10) for the duration of the testing, when the subscriber line (10) does not receive voltage supply from the subscriber line interface (12).

2. An apparatus for testing a subscriber line interface (12), the apparatus comprising a testing unit (13), means (16) for disconnecting a subscriber line (10) from the subscriber line interface (12) and for connecting the testing unit (13) to the subscriber line interface (12), in place of the subscriber line (10), **characterized in that** the apparatus further comprises means for securing the voltage supply to the subscriber line (10) during the testing of the subscriber line interface (12), said means comprising a separate voltage supply (14) and means (15) for connecting the voltage supply to the subscriber line for the duration of the testing, when the subscriber line (10) does not receive voltage supply from the subscriber line interface (12).

## Patentansprüche

1. Verfahren zum Prüfen einer Teilnehmerleitungsschnittstelle (12), wobei eine Teilnehmerleitung (10) von der Teilnehmerleitungsschnittstelle (12) getrennt wird, und eine Prüfeinheit (13) mit der Teilnehmerleitungsschnittstelle (12) anstelle der Teilnehmerleitung (10) verbunden wird, **dadurch gekennzeichnet, dass**
während dem Prüfen der Teilnehmerleitungsschnittstelle (12) eine kontinuierliche Spannungsversorgung an die Teilnehmerleitung (10) durch Verbinden einer separaten Spannungsversorgung (14) mit der Teilnehmerleitung (10) für die Dauer des Prüfens sichergestellt wird, wenn die Teilnehmerleitung (10) keine Spannungsversorgung von der Teilnehmerleitungsschnittstelle (12) empfängt.

2. Vorrichtung zum Prüfen einer Teilnehmerleitungsschnittstelle (12), wobei die Vorrichtung eine Prüfeinheit (13), Mittel (16) zum Trennen einer Teilnehmerleitung (10) von der Teilnehmerleitungsschnittstelle (12) und zum Verbinden der Prüfeinheit (13) mit der Teilnehmerleitungsschnittstelle (12) anstelle der Teilnehmerleitung (10) umfasst, **dadurch gekennzeichnet, dass**
die Vorrichtung weiter Mittel umfasst, um die Spannungsversorgung an die Teilnehmerleitung (10) während dem Prüfen der Teilnehmerleitungsschnittstelle (12) sicherzustellen, wobei die Mittel eine separate Spannungsversorgung (14) und Mittel (15) zum Verbinden der Spannungsversorgung mit der Teilnehmerleitung während der Dauer des Prüfens umfassen, wenn die Teilnehmerleitung (10) keine Spannungsversorgung von der Teilnehmerleitungsschnittstelle (12) empfängt.

## Revendications

1. Procédé de contrôle d'une interface de ligne d'abonné (12), dans lequel une ligne d'abonné (10) est déconnectée de l'interface de ligne d'abonné (12) et une unité de contrôle (13) est connectée à l'interface de ligne d'abonné (12), à la place de la ligne d'abonné (10), **caractérisé en ce que** pendant la durée du contrôle de l'interface de ligne d'abonné (12), une alimentation de tension continue fournie à la ligne d'abonné (10) est assurée en connectant une source d'alimentation de tension séparée (14) à la ligne d'abonné (10) pour la durée du contrôle, lorsque la ligne d'abonné (10) ne reçoit pas d'alimentation de tension en provenance de l'interface de ligne d'abonné (12).

2. Appareil destiné au contrôle d'une interface de ligne d'abonné (12), l'appareil comprenant une unité de contrôle (13), des moyens (16) pour déconnecter une ligne d'abonné (10) de l'interface de ligne d'abonné (12) et pour relier l'unité de contrôle (13) à l'interface de ligne d'abonné (12), à la place de la ligne d'abonné (10), **caractérisé en ce que** l'appareil comprend en outre des moyens pour assurer la fourniture de tension à la ligne d'abonné (10) pendant la durée du contrôle de l'interface de ligne d'abonné (12), lesdits moyens comprenant une source d'alimentation de tension séparée (14) et des moyens (15) pour relier la source d'alimentation de tension à la ligne d'abonné pour la durée du contrôle, lorsque la ligne d'abonné (10) ne reçoit pas d'alimentation de tension en provenance de l'interface de ligne d'abonné (12).
